# EUROPÄISCHE PATENTSCHRIFT

(11) **EP 2 164 355 B1**
(45) Veröffentlichungstag und Bekanntmachung des Hinweises auf die Patenterteilung: **28.09.2011**
(21) Anmeldenummer: 08759296.0
(22) Anmeldetag: 19.06.2008
(51) Int. Cl.: A43D 1/06, G01B 5/20, G01B 11/24, G01B 15/04, G01B 17/06

(54) **TASTVORRICHTUNG UND VERFAHREN ZUM ERFASSEN EINER DREI-DIMENSIONALEN RAUMFORM EINES KÖRPERS**
SENSING APPARATUS AND METHOD FOR DETECTING A THREE-DIMENSIONAL PHYSICAL SHAPE OF A BODY
DISPOSITIF DE PALPAGE ET PROCÉDÉ D'ACQUISITION D'UNE FORME SPATIALE TRIDIMENSIONNELLE D'UN CORPS

(30) Priorität: 11.07.2007 DE 102007032609
(43) Veröffentlichungstag der Anmeldung: 24.03.2010
(73) Patentinhaber: Corpus.E AG, 70178 Stuttgart (DE)
(72) Erfinder: PFEIFFER, René, 71706 Markgröningen (DE); RUTSCHMANN, Dirk, 70180 Stuttgart (DE)
(74) Vertreter: Prinz & Partner
(86) Internationale Anmeldenummer: PCT/EP2008/004961
(87) Internationale Veröffentlichungsnummer: WO 2009/006989

(56) Entgegenhaltungen:
- EP-A2- 1 134 546
- EP-A2- 1 134 546
- WO-A-03/087715
- DE-A1- 10 309 788
- DE-A1-102005 039 632
- DE-C1- 19 721 903
- DE-C1- 19 721 903
- JP-A- 57 127 804
- JP-A- 2000 125 909
- NL-A- 8 900 820
- US-B1- 6 175 647

## Beschreibung

Die Erfindung betrifft eine Tastvorrichtung und ein Verfahren zum Erfassen einer drei-dimensionalen Raumform eines Körpers umfassend ein Tastende zum Abtasten einer abzutastenden Fläche des Körpers und eine Kamera, wobei mit dem Tastende eine Vielzahl von Punkten auf der abzutastenden Fläche abgetastet werden.

Die Herstellung von gut passenden Schuhen im Rahmen des sogenannten mass-customization erfordert in der Regel die 3D Digitalisierung der Raumform der Füße des Kunden. Mit diesen Daten wird aus einer Kollektion von körperlich oder virtuell als 3D Datensatz vorhandenen Schuhleisten derjenige Leisten ausgewählt, mit welchem der am besten passende Schuh produziert werden kann (mass-customization eines best-fit Schuhs). Bei dem anspruchsvolleren individuellen mass-customization Geschäftsmodell wird aus dem 3D Datensatz des digitalisierten Fußes ein individueller Leisten gefertigt und hiermit ein individueller Maßschuh produziert.

Es ist bis heute noch sehr schwierig, automatisch aus dem 3D Modell eines Fußes die 3D Form eines geeigneten Leistens zu ermitteln, da zahlreiche weitere Faktoren wie Schuh-Stil und modische Form, Materialeigenschaften, anatomische und bio-mechanische Nebenbedingungen des Kunden usw. mit eingehen. Leisten haben eine deutlich andere 3D Form als der zugehörige nicht komprimierte Fuß. Diese Schwierigkeiten führen dazu, daß trotz der steigenden Verfügbarkeit von geeigneten Fußscannem das Geschäftsmodell des Schuh-mass-customization nur zaghaft wächst. Da insbesondere auch kostengünstige und kalibrierungsfreie Fußscanner wie beispielsweise der "lightbeam®" Fußscanner der corpus.e AG, Stuttgart (siehe www.corpus-e.com) mittlerweile zur Verfügung stehen, ist die wirtschaftliche Situation des mass-customization von Fußbekleidung wegen dieser genannten Schwierigkeiten der Anpassung von 3D Fußform an 3D Leistenform unbefriedigend.

Ein alternativer Ansatz ist es, das 3D Modell eines digitalisierten Fußes mit der Innenform eines realen Schuhs zu vergleichen. Hierbei kann es sich beispielsweise um die Innenformen des Sortimentes von zum Verkauf angebotenen Schuhen handeln oder aber um die in einer Datenbank gespeicherten Innenformen der Produkte von zahlreichen in einem Geschäftsverbund organisierten Schuhproduzenten. Durch Vergleich der Raumform des digitalisierten Fußes eines Kunden mit einer Auswahl von Innenformen von in Frage kommendem Schuhwerk kann wesentlich direkter der am besten passende Schuh gefunden werden, da Schuh-Innenform und 3D Fußmodell sich ähnlicher sind als ein Schuhleisten und ein 3D Fußmodell.

Ein getragener Schuh hat den Anpassungsprozeß an die Anatomie des Fußes des Schuhträgers gespeichert. Es macht daher beispielsweise bei orthopädischen Schuhen Sinn, die Innenform eines getragenen Schuhs zur Auswahl eines neuen Schuhs heranzuziehen, indem die Innenform des getragenen Schuhs mit den Innenformen der zum Verkauf angebotenen Schuhen verglichen wird.

Allerdings ist das Problem der zerstörungsfreien 3D Digitalisierung der Innenform von Schuhbekleidung noch nicht zufriedenstellend gelöst. Es ist bekannt, Schuhe mit einer Masse auszugießen und diese Masse zu digitalisieren. Hierzu muß in der Regel aber der Schuh aufgeschnitten und damit zerstört werden.

Das französischen Institut CTC aus Lyon (www.ctcgroupe.com) beschreibt in seiner Broschüre CTC-Enterprise International -fall 2006 auf den Seiten 6 und 7 eine aufwendige Anordnung zur Digitalisierung des Innenschuhs mit Hilfe von zwei in einer Stereoanordnung angebrachten endoskopischen Kamerasystemen.

In der PCT Offenlegung WO 03/087715 A1 (R. Massen) wird ein Verfahren beschrieben, bei welchem ein mit photogrammetrischen Marken versehener Socken so in den Innenschuh gestopft wird, daß er an der Innenwand anliegt und die Marken nach innen zeigen. Mit einer oder mehreren endoskopischen Kamerasystemen kann dann der Innenraum photogrammetrisch digitalisiert werden. Aber auch dieses Verfahren ist aufwendig und zeitraubend.

In der industriellen Photogrammetrie werden Systeme eingesetzt, bei welchen ein mit hellen, kreuzförmig angeordneten Marken versehener Taster manuell punktweise auf einen zu vermessenden Körper wie z.B. eine Autokarosserie aufgesetzt wird. Der Taster wird aus relativ großer Distanz von in der Regel mehreren hochauflösenden photogrammetrischen Kameras beobachtet. Die inneren und äußeren Parameter dieser Kameras werden vor der eigentlichen Vermessung über eine aufwendige Kalibrierung ermittelt. Danach können aus den Bildern dieser Kameras, welche den markierten Taster im Raum zeigen, die 3D Punktkoordinaten an den vom Taster berührten Stellen des digitalisierten Körpers gemessen werden (siehe z.B. das System V-Stars der australischen Firma Geodetic Systems Inc, www.geodetic.com). Wenn die Kameras in einem Videomode betrieben werden und fortlaufend Bilder des Tasters aufnehmen, spricht man auch von "Videogrammetrie". Diese Systeme sind sehr aufwendig im Hinblick auf die Kalibrierung, auf den Raumbedarf und den sehr teueren photogrammetrischen Kameras und sind daher nicht für den Einsatz in einem Schuhgeschäft geeignet.

Aus dem Bereich der Medizin sind ähnlich aufwendige photogrammetrische Systeme bekannt, welche die Position eines medizinischen Gerätes wie z.B. eines Skalpells im Raume vermessen. Hierbei werden ähnlich wie bei dem V-Stars System von Geodetic Systems Inc. leuchtende oder gut reflektierende Marken an dem Skalpellgriff befestigt und diese Marken fortlaufend von mehreren im Operationsraum angebrachten Kameras beobachtet. Hierdurch kann aus der photogrammetrischen Auswertung der Bildsequenzen aller Kameras die jeweilige Raumposition der Skalpell-Marken und, hieraus abgeleitet, auch der sich im Körper unsichtbar befindlichen Skalpell-Spitze ermittelt werden. Solche Systeme werden beispielsweise von der deutschen Firma BrainLAB AG, München, geliefert (www.brainlab.com).

Allen diesen teuren industriellen photogrammetrischen [Kamera/markierter Taster]-Systemen ist gemeinsam, daß der sehr präzise markierte Meßtaster aus einer relativ großen Entfernung von in der Regel mehreren genau spezifizierten, ausgerichteten und kalibrierten Kameras erfaßt wird. Ihre Bedienung ist dem angelernten Spezialisten oder Techniker vorbehalten, insbesondere auch wegen der oft zu wiederholenden Kalibrierungsprozeduren vor Beginn der eigentlichen Digitalisierung.

DE 197 21 903 C1 offenbart eine Anlage zur messtechnischen Erfassung der 3D Daten von Oberflächenpunkten. Hierzu ist ein Taster mit einer Kamera starr verbunden, die vom Meßobjekt weg auf eine das Meßobjekt überdeckende Targetfläche gerichtet ist. Die Targetfläche weist Referenzpunkte auf, deren räumliche Lage bekannt ist. Eine Tasterspitze des Tasters wird auf den zu vermessenden Oberflächenpunkt gesetzt und die 3D Lage der Tasterspitze aus den von der Kamera erfassten Referenzpunkten bestimmt.

EP 1 134 546 A2 offenbart aufbauend auf der vorstehend genannten DE 197 21 903 C1 eine einfache Erweiterung der Targetfläche bis hin zur vollständigen Umschließung des Meßobjekts ohne die Notwendigkeit einer Neukalibrierung, um so die Oberfläche des Meßobjekts rundherum bestimmen zu können.

Es besteht daher ein hohes wirtschaftliches und technisches Interesse daran, ein kostengünstiges, platzsparendes, weitgehend kalibrierungsfreies und einfach zu bedienendes Verfahren zur zerstörungsfreien Erfassung der 3D Form des Innenraumes von neuer oder bereits getragener Fußbekleidung zu haben, mit welchem 3D Modelle des Innenraums von Schuhwerk ermittelt werden können und durch Vergleich des 3D Modells des Fußes eines Kunden mit den 3D Modellen des Innenraums von zum Verkauf angebotenen Schuhen der am besten passende Schuh ermittelt werden kann. Insbesondere wäre es von großem Vorteil, wenn diese zerstörungsfreie Erfassung der 3D Form des Innenraumes von Schuhen unter Verwendung der bereits vorhandenen Komponenten des für das mass-customization ohnehin erforderlichen 3D Fuß-Scanners geschehen könnte.

Dies wird erfindungsgemäß durch eine Tastvorrichtung gemäß Anspruch 1 erreicht. Ein Tastende zum Abtasten einer abzutastenden Fläche eines Körpers ist über eine Verbindungsvorrichtung starr mit einer Kamera verbunden. Bei einer Bewegung des Tastendes wird also die Kamera immer mitbewegt. Die Kamera ist so angeordnet, daß sie eine mit automatisch photogrammetrisch auswertbaren Marken versehene Fläche erfassen kann, auf der der abzutastende Körper steht, während das Tastende verschiedene Punkte der abzutastenden Fläche des Körpers abtastet. Da damit die Blickrichtung der Kamera im Wesentlichen in Richtung Tastende ist, kann die mit automatisch photogrammetrisch auswertbaren Marken versehene Fläche Teil eines 3D Fuß-Scanners sein, und der abzutastende Körper wird an die Stelle gestellt, die üblicher Weise für die Füße vorgesehen ist. Automatisch photogrammetrisch auswertbare Marken sind Marken, die z.B. von einer Recheneinheit mit photogrammetrischem Auswerteprogramm automatisch einzeln identifiziert werden können und eine genaue Bestimmung ihrer Position erlauben. Die Marken sind hierfür in geeigneter Weise codiert, wie es aus dem Stand der Technik bekannt ist. Handelt es sich bei der abzutastenden Fläche um eine Innenwand eines Hohlkörpers, also beispielsweise um die Innenform eines Schuhs, so ist die Verbindungsvorrichtung so gestaltet, daß die Kamera aus dem Hohlkörper, bzw. dem Schuh herausragt, während das Tastende Punkte im Innenraum des Schuhs abtastet. Die erfindungsgemäße Tastvorrichtung umfaßt ferner ein photogrammetrisches Auswerteprogramm für eine Recheneinheit, wobei die Recheneinheit so gestaltet ist, dass von der Kamera erzeugte Bildsignale an die Recheneinheit geleitet werden können und das Auswerteprogramm aus der Folge aufgenommener und übertragener Bildausschnitte mit den automatisch photogrammetrisch auswertbaren Marken die 3D Koordinaten der abzutastenden Raumform berechnen kann. Durch die starre Verbindung zwischen Tastende und Kamera ändern sich die Position und Ausrichtung der Kamera mit jeder Bewegung des Tastendes und es wird ein jeweils anderer Bildausschnitt aufgenommen, auf dem jeweils eine Mehrzahl automatisch photogrammetrisch auswertbarer Marken mit für diesen Bildausschnitt spezifischen 2D Koordinaten erfaßt sind. Aus der Folge aufgenommener und übertragener Bildausschnitte kann die Kameraposition und damit auch die Position des Tastendes bestimmt werden.

Die Tastvorrichtung erlaubt es, insbesondere Innenräume von Körpern z.B. taktil abzutasten und dabei die jeweiligen Raumpositionen des Tastendes über die photogrammetrischen Bildaufnahmen einer mit dem Tastende mechanisch starr verbundenen Kamera rein aus einer photogrammetrisch markierten Grundplatte, d.h. der mit automatisch photogrammetrisch auswertbaren Marken versehenen Fläche, auf welcher der Körper fixiert ist, zu ermitteln. Damit werden keine aufwendig kalibrierten Meß-Mechaniken benötigt. Die einzige Meßhilfe, welche absolut genaue und bekannte Strecken enthält, ist die photogrammetrisch markierte Grundplatte; diese kann drucktechnisch einfach und mit hoher absoluter Präzision hergestellt werden. Damit ist die erfindungsgemäße Tastvorrichtung und das erfindungsgemäße Verfahren selbstkalibrierend und kann mit einfachen Kameras und Abbildungsoptiken eingesetzt werden.

In einer Ausführungsform umfaßt das Tastende eine opto-elektronische und/oder akustische Entfernungsmeßvorrichtung. Das Tastende muß in dieser Ausführungsform nicht in körperlichen Kontakt z.B. zur Innenwand eines zu digitalisierenden Hohlraums gebracht werden. Damit ist das Tastende als optischer Antaster ausgeführt, welcher bei einer genügenden und von der Tastanordnung vorgegebenen Nähe zur Innenwand eine Bildaufnahme auslöst bzw. beim Erreichen eines Auslöseabstandes Bilder aus einer Sequenz fortlaufender Bilder der Kamera für die photogrammetrische Auswertung markiert.

Weitere bevorzugte Ausführungsformen der Tastvorrichtung sind den Unteransprüchen zu entnehmen.

Die Erfindung stellt ferner ein Verfahren gemäß Anspruch 10 bereit. In einer bevorzugten Ausführungsform wird der Innenraum eines Hohlkörpers, insbesondere eines Schuhs, erfaßt, wobei die Kamera beim Abtasten des Innenraums außerhalb des Hohlkörpers verbleibt. Aus einer insgesamt erzeugten Punktwolke von Innenraum-Koordinaten aus ermittelten Positionen wird die konvexe Hülle des Innenraums bestimmt. Ein Vergleich der ermittelten Positionen des Tastendes mit der konvexen Hülle des Innenraums erlaubt es, die Punkte von ermittelten Position zu erkennen, die nicht auf der konvexen Hülle liegen. Diese werden gelöscht. Damit werden Meßfehler, die z.B. dadurch entstehen, daß die Person, die die Tastanordnung führt, von der Innenwand abkommt, automatisch korrigiert, indem die fehlerhaften Meßpunkte entfernt werden. Das erlaubt eine besonders einfache Gestaltung der Tastanordnung, da diese nicht über einen Auslösekontakt verfügen muß, welcher nur dann eine Bildaufnahme auslöst bzw. ein aufgenommenes Kamerabild markiert, wenn das Tastende die Innenwand des Schuhwerks taktil berührt. Statt dessen nimmt die bewegte Kamera z.B. kontinuierlich Bilder auf und benötigt keine Synchronisation mit dem Tastende oder mit der Bewegung.

Neben der Digitalisierung der Innenform von Schuhwerk sind die erfindungsgemäße Anordnung und das erfindungsgemäße Verfahren ebenso geeignet, die Innenform von Prothesen-Trichter und ähnlichen orthopädischen oder prothetischen Hohlkörpern zu erfassen. Darüber hinaus ist auch die Digitalisierung von Innenräumen von technischen drei-dimensionalen Produkten möglich. Selbstverständlich können auch Außenwände abgetastet werden.

Die Erfindung umfaßt neben Ausführungsformen, die eine manuelle Führung der Tastanordnung vorsehen, auch motorische Führungen, welche das Tastende in einer vorgegebenen oder zufälligen Bewegung im Innenraum so bewegen, daß zahlreiche Punkte auf der Innenwand berührt werden, während gleichzeitig mit der Kamera Aufnahmen der photogrammetrisch markierten Fläche erstellt werden. Durch die bleibende Eigenschaft der Selbstkalibrierung kann der motorische Antrieb sehr einfach gehalten werden.

In einer bevorzugten Ausführungsform umfasst das Verfahren ferner Kalibrierungsschritte, wobei die Tastanordnung, d.h. die relative Lage des Tastendes zum Koordinatennullpunkt des Bildsensors der ersten Kamera sowie die inneren Parameter der ersten Kamera berechnet werden. Hierbei wird die Tastanordnung mit Hilfe der gleichen Meßeinrichtung, umfassend die photogrammetrisch markierte Fläche und die photogrammetrische Auswertung der von der Kamera gelieferten Bilder, kalibriert, d.h. die räumliche Lage des Tastendes wird bezüglich des Koordinatensystems des Bildsensors der Kamera ermittelt. Hierzu wird das Tastende an einer bekannten Position auf der mit automatisch photogrammetrisch auswertbaren Marken versehenen Fläche fixiert und die Kamera auf einer Kugelfläche im Raum bewegt, wobei Bildaufnahmen von der photogrammetrisch markierten Fläche gemacht werden. Die Positionen der Kamera kann dann durch eine Auswertung der Bildaufnahmen mit Hilfe der photogrammetrischen Marken berechnet und anhand der Kugelform der Bewegung der genaue räumliche Abstand zwischen Kamerasensorkoordinaten-Ursprung und Tastende bestimmt werden.

Vorzugsweise wird die Positionierung des Tastendes während dieser kugelförmigen Bewegung durch eine muldenförmige Aufnahme für das Tastende in der Grundplatte erleichtert.

Weitere Ausführungsformen und Vorteile der Erfindung werden durch die nachfolgende Beschreibung einer bevorzugten Ausführungsform deutlich werde. Die Erfindung wird beispielhaft beschrieben an der wirtschaftlich besonders interessanten Kombination des photogrammetrischen lightbeam® Fußscanners aus dem Stand der Technik mit dem erfindungsgemäßen Verfahren und der erfindungsgemäßen Vorrichtung zur 3D Erfassung des Innenraums von Schuhwerk, wobei folgende Abbildungen verwendet werden:
Figuren 1A und 1B zeigen schematisiert einen lightbeam® Fußscanner aus dem Stand der Technik;
Figur 2 zeigt schematisiert die erfindungsgemäße Tastanordnung; und
Figur 3 zeigt eine Seitenansicht einer Punktwolke einer ermittelten 3D Raumform eines Innenschuhs sowie einen Schnitt durch die Punktwolke und damit die zugehörige konvexe Hülle der inneren Raumform.

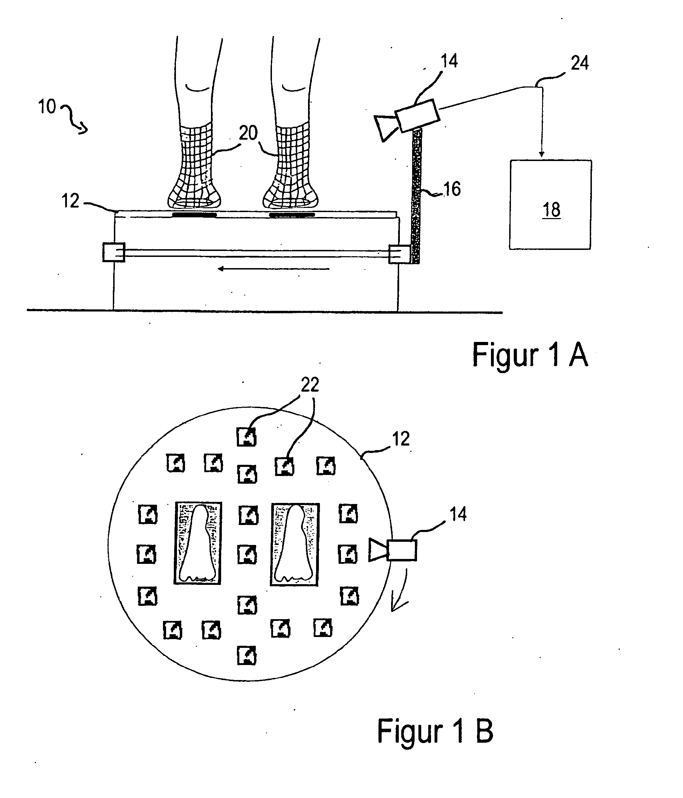

Figur 1A zeigt in Seitenansicht einen photogrammetrischen lightbeam® Fußscanner 10 aus dem Stand der Technik zur Gewinnung der Raumform von Füßen, der in vorteilhafter Weise um eine erfindungsgemäße Tastvorrichtung ergänzt werden kann. Fußscanner oder Fußdigitalisierer 10 umfaßt eine Grundplatte 12, eine Bildsensorvorrichtung 14, die an einem Halter 16 befestigt ist, und eine Recheneinheit 18. Ein Kunde bekleidet seine Füße mit Socken 20, welche photogrammetrisch auswertbare Marken tragen (siehe DE 10113211 "Markierungssystem für die automatische photogrammetrische Digitalisierung von Körpern und Körperteilen"). Er steht an einer vorgegebenen Position auf der Grundplatte 12, die in Figur 1B in Aufsicht dargestellt ist. Die Grundplatte 12 ist annähernd kreisförmig und ihre Oberfläche ist eine mit automatisch photogrammetrisch auswertbaren Marken 22 versehene Fläche.

Die motorisch bewegte Bildsensorvorrichtung 14 fährt auf einer angenäherten Kreisbahn um den Kunden herum und erfaßt gleichzeitig die photogrammetrisch markierte Fuß-/Bein-Partie 20 und einen Ausschnitt der ebenfalls photogrammetrisch markierten Grundplatte 12. Mit der Bildsensorvorrichtung 14 wird dabei aus einer Vielzahl von Raumpositionen sowohl der Fuß / die Füße als auch jeweils ein Ausschnitt der markierten Grundplatte 12 aufgenommen. Die von der Bildsensorvorrichtung 14 so erzeugten Bilddaten werden über eine Schnittstelle 24 auf eine Recheneinheit 18 zur photogrammetrischen Auswertung übertragen. Die Übertragung erfolgt in einer beliebigen aus dem Stand der Technik bekannten Form, drahtgebunden, drahtlos, über Datenträger,... Durch diese Anordnung ist es möglich, neben der Vermessung der 3D Form des Fußes oder der Füße gleichzeitig die Raumposition (d.h. die äußeren Parameter) der Bildsensorvorrichtung sowie ihre inneren Parameter genau zu berechnen, so daß dieses System den großen Vorteil der inhärenten Selbstkalibrierung aufweist.

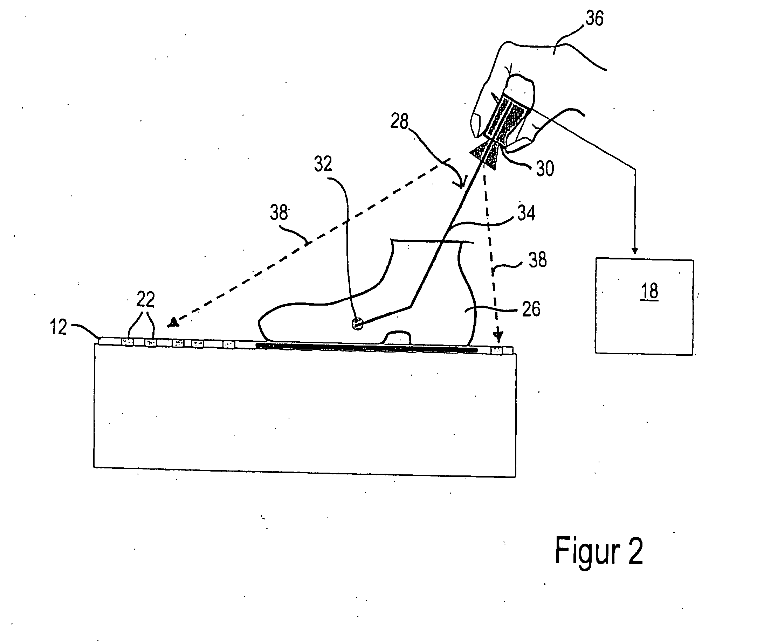

Erfindungsgemäß wird eine ähnliche Grundanordnung zur Digitalisierung der Innenform von Schuhwerk eingesetzt. Figur 2 zeigt in Seitenansicht einen Schuh 26, dessen Innenraum zu digitalisieren ist. Der Schuh 26 ist auf der photogrammetrisch markierten Grundplatte 12 mit Marken 22 positioniert und fixiert. In wirtschaftlich günstiger Weise handelt es sich um die Grundplatte des Fußscanners 10, die bereits Fixierungsvorrichtungen vorsieht. Selbstverständlich kann aber auch eine andere mit automatisch photogrammetrisch auswertbaren Marken versehene Fläche verwendet werden.

Figur 2 zeigt ferner eine Tastanordnung 28 mit einer Kamera 30, einem Tastende 32 und einer Verbindungsvorrichtung 34, die die Kamera 30 mit dem Tastende 32 starr verbindet. Die Verbindungsvorrichtung 34 ist vorteilhafter Weise als gebogener Stab ausgeführt, so daß das Tastende 32 an alle oder annähernd alle Punkte der Schuhinnenwand geführt werden kann, während die Kamera 30 immer außerhalb des Schuhs verbleibt. Die Form der Verbindungsvorrichtung 34 kann an die jeweiligen Meßaufgaben angepaßt werden. Es ist möglich, statt einer Kamera zwei oder mehr Kameras vorzusehen, die dann unter unterschiedlichen Winkeln die Fläche 12 betrachten. Eine Hand 36 führt manuell die Tastanordnung 28. Es ist aber auch möglich, eine motorische Führung der Tastanordnung 28 vorzusehen. Gestrichelte Pfeile 38 deuten das Bildfeld der Kamera 30 an. Die Kamera 30 bzw. die Kameras ist/sind so angeordnet, daß sie im wesentlichen in Richtung Tastende zeigen. Die Kamera 30 ist damit so angeordnet, daß sie im Bildfeld Ausschnitte der mit den automatisch photogrammetrisch auswertbaren Marken 22 versehenen Fläche 12 erfaßt, wenn der Schuh 26, der auf der photogrammetrischen Fläche 12 steht, abgetastet wird. Die von der Kamera 30 aufgenommenen Bilder werden als Bildsignale an die Recheneinheit 18 übertragen. Wird die Tastanordnung 28 zusammen mit dem Fußscanner 10 verwendet, so kann die Recheneinheit des Fußscanners 10 verwendet werden, die um Auswertefähigkeiten entsprechend der Tastanordnung 28 ergänzt wurde. Es ist aber selbstverständlich auch möglich, eine andere getrennte Recheneinheit mit einem entsprechenden Auswerteprogramm zu verwenden. Die Bildsignale von der Kamera 30 werden in einer beliebigen aus dem Stand der Technik bekannten Form, drahtgebunden, drahtlos, über Datenträger, per Funk oder andere Mittel an die Recheneinheit 18 übertragen.

Zum Abtasten wird die Tastanordnung 28 manuell oder motorisch so geführt, daß das Tastende 32 die Innenwände des Schuhs 26 an zahlreichen Stellen abtastet und die Kamera 30 aus ihren Raumpositionen fortlaufend Bildausschnitte der photogrammetrisch markierten Grundplatte 12 aufnimmt und über eine Schnittstelle diese an die Recheneinheit 18 zur photogrammetrischen Auswertung überträgt. Die Kamera 30 arbeitet dabei vorzugsweise in einem Videomode. Die Innenwände müssen nicht auf einem vorgegebenen Weg abgetastet werden, sondern die Abtastung kann frei auf beliebigem nicht systematischem Weg erfolgen.

In einer ersten Ausführungsform berührt das Tastende 32 vorwiegend die Innenwand des Schuhwerks 26 und tastet diese mechanisch ab, dabei kann das Tastende 32 mit einem mechanischen und/oder optischen und/oder induktiven und/oder akustischen Kontaktmechanismus ausgerüstet sein, welcher bei Berührung mit der Innenwand ein Kontaktsignal erzeugt. Entweder löst erst das Kontaktsignal eine Bildaufnahme aus oder bevorzugter Weise nimmt die Kamera 30 kontinuierlich Bilder in einem Videomodus auf und durch das Kontaktsignal werden diejenigen Bilder ausgewählt, die zum Zeitpunkt der Kontaktsignalabgabe aufgenommen wurden.

In einer zweiten Ausführungsform verfügt das Tastende 32 über eine mechanisch linear federnd verschiebbare Tastspitze mit linearem Weggeber. Vom linearen Weggeber wird ein Wegsignal zur Recheneinheit 18 bei Berührung der Tastspitze mit der Innenwand des Schuhs 26 übertragen. Aus dem Wegsignal wird ein Korrekturvektor berechnet und dieser in der Recheneinheit 18 zu den photogrammetrisch ermittelten Raumkoordinaten des Tastendes 32 hinzuaddiert. Damit können die Innenwand-Koordinaten ermittelt werden, ohne daß die Tasterspitze mit nennenswerten Kräften die Innenwand mechanisch belastet. Die zweite Ausführungsform kann mit der ersten Ausführungsform kombiniert werden.

In einer dritten Ausführungsform verfügt das Tastende 32 über eine opto-elektronische und/oder akustische Entfernungsmeßvorrichtung, die eine Entfernung des Tastendes 32 zur Raumform in mindestens einer definierten Richtung mißt. Die gemessene Entfernung wird an die Recheneinheit 18 übertragen und ein Korrekturvektor aus der gemessenen Entfernung berechnet. Dieser Korrekturvektor wird zu den aus den Aufnahmen der Kamera 30 photogrammetrisch ermittelten Raumkoordinaten des Tastendes 32 hinzuaddiert. Somit werden die Innenwand-Koordinaten ermittelt, ohne daß das Tastende 32 die Innenwand mechanisch berührt.

Die Kamera 30 nimmt in allen Ausführungsformen während der Abtastung der Innenwand vorzugsweise permanent Bilder der photogrammetrisch markierten Grundplatte 12 auf und überträgt diese Bilder an die Recheneinheit 18, welche aus diesen Bildsequenzen mit den dem Fachmann bekannten Verfahren der Photogrammetrie die jeweilige Raumposition der Kamera 30 und daraus abgeleitet die Raumposition des mit der Kamera 30 starr verbundenen Tastendes 32 berechnet. Damit entsteht eine Punktwolke von Raumpunkten, welche in der überwiegenden Mehrzahl aus Raumkoordinaten der Innenwand des Schuhwerks bestehen, gemischt mit wenigen Raumpunkten, welche Tastpositionen im Inneren des Hohlraums wiedergeben, insbesondere wenn kein Kontaktsignal verwendet wird.

Wie bereits ausgeführt, ist die Tastvorrichtung selbstkalibrierend, da immer photogrammetrisch auswertbare Marken 22, die an bekannten Positionen liegen, mitaufgenommen werden. Allerdings bedarf die Tastanordnung 28 selbst einer Kalibrierung, d.h. die relative Lage des Tastendes 32 zum Koordinatennullpunkt des Bildsensors der Kamera 30 sowie die inneren Parameter der Kamera 30 müssen berechnet werden. Es wird der Abstand zwischen Kamera 30 und Tastende 32 sowie die Ausrichtung von Kamera 30 und Tastende 32 zueinander berechnet. Das ist insbesondere dann wichtig, wenn die Form der Verbindungsvorrichtung 34 an die jeweilige Meßaufgabe angepaßt wird. Hierbei wird die Tastanordnung 28 mit Hilfe der gleichen Meßeinrichtung, umfassend die photogrammetrisch markierte Fläche und die photogrammetrische Auswertung der von der Kamera gelieferten Bilder, kalibriert, d.h. die räumliche Lage des Tastendes 32 wird bezüglich des Koordinatensystems des Bildsensors der Kamera 30 ermittelt. Hierzu wird das Tastende 32 an einer bekannten Position auf der mit automatisch photogrammetrisch auswertbaren Marken 22 versehenen Fläche 12 fixiert, wozu in der bevorzugten Ausführungsform eine kleine Mulde in der Grundplatte 12 vorgesehen ist. Die Kamera 30 wird dann manuell oder motorisch auf einer Kugelfläche im Raum bewegt, wobei von der Kamera 30 Bildaufnahmen von der photogrammetrisch markierten Fläche 12 gemacht werden. Die Positionen der Kamera 30 können dann durch eine Auswertung der Bildaufnahmen mit Hilfe der photogrammetrischen Marken 22 berechnet und anhand der Kugelform der Bewegung der genaue räumliche Abstand zwischen Kamerasensorkoordinaten-Ursprung und Tastende 32 bestimmt werden.

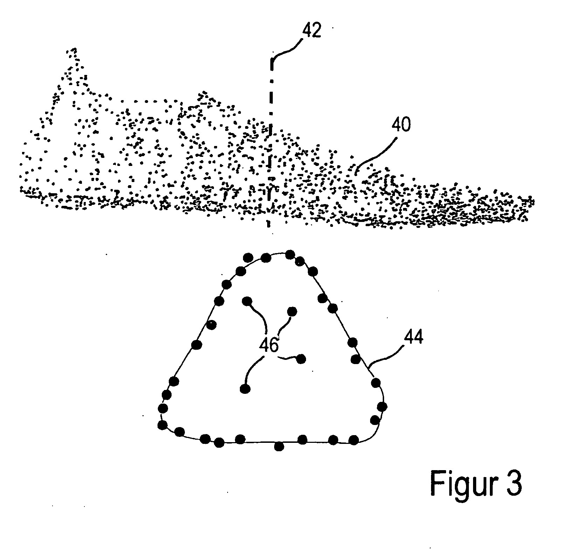

Figur 3 zeigt in Seitenansicht eine Punktwolke 40, wie sie in der Recheneinheit 18 beispielhaft für die 3D Raumform der Innenwand des Schuhs 26 berechnet wird. Entlang einer Schnittlinie 42 ergibt sich eine konvexe Hülle 44 des Innenraums, wie sie von der Recheneinheit 18 aus der Punktwolke ermittelt wird. Erkennbar liegen Punkte 46 der Punktwolke 40 nicht auf der Hülle 44. Das Auswerteprogramm ist so gestaltet, daß es nicht auf der konvexen Hülle der inneren Raumform liegende Punkte erkennt und damit automatisch aus der erzeugten Punktewolke als nicht zur Innenform des Schuhwerks gehörig erkennt und aus dem 3D Modell löscht.

Es handelt sich bei den Punkten 46 um solche Raumpunkte, welche aus Tastanordnungspositionen ermittelt wurden, bei welchen das Tastende 32 momentan nicht die Innenwand berührt hat. Sie sind leicht zu erkennen und zu löschen, da diese Raumpunkte im Innern der 3D Punktewolke des Innenschuhs liegen.

Das erfindungsgemäße Verfahren, das die erfindungsgemäße Tastvorrichtung verwendet, erlaubt es also in sehr einfacher Weise, in kürzester Zeit eine große Zahl von Raumpunkten der Innenwand eines Schuhwerks zu erhalten, wobei in vorteilhafter Weise ein vorhandener photogrammetrischer Fußscanner aus dem Stand der Technik mit verwendet werden kann.

Wenn auch die Erfindung nicht auf diese besonders wirtschaftliche Kombination von photogrammetrischem 3D Fußscanner und photogrammetrisch-taktilem Innenschuh-Scanner, d.h. die erfindungsgemäße Tastvorrichtung, beschränkt ist, so zeigt das hier beispielhaft beschriebene Verfahren und die Tastvorrichtung, wie gering der zusätzliche Aufwand für die Digitalisierung eines Innenschuhs im Vergleich zur reinen Fußdigitalisierung ist. Damit wird in besonderem Maße die oben genannte Aufgabe erleichtert, für die Auswahl geeigneter, gut passender Schuhe das 3D Modell des Fußes eines Kunden zusammen mit einer Datenbank von gespeicherten 3D Modellen des Innenschuhs von in Frage kommenden Schuhmodellen zu verwenden.

Die Bestimmung eines passenden Schuhwerks kann mit Hilfe der Erfindung auch dadurch erreicht werden, daß ein durch Tragen bereits eingelaufener, gut passender Schuh des Kunden bzgl. seines Innenraums digitalisiert wird und daß dieses 3D Modell des eingelaufenen Innenschuhs mit den Innenräumen der in einer Datenbank verfügbaren Schuhmodelle verglichen wird bzw. aus diesem verformten 3D Modell des Innenschuhs ein individuelles gut passendes Schuhwerk hergestellt wird. Insbesondere bei orthopädischem Schuhwerk stellt ein durch Tragen verformter Innenschuh ein wertvolleres 3D Modell dar, als der direkt digitalisierte Fuß des Patienten, da es die Historie der Verformungen des Schuhwerks wiedergibt.

In einer bevorzugten Ausführungsform ist die Tastvorrichtung eine Ergänzung eines 3D Fußscanners 10 und umfaßt eine Halterung. Die Halterung kann so mit dem Halter 16 des Fußscanners 10 verbunden werden, daß die Tastanordnung 28 dergestalt in der Halterung gehaltert werden kann, daß für die Digitalisierung eines Fußes mit dem photogrammetrischen Fußscanner 10 die Bildsensorvorrichtung 14 den zu digitalisierenden Fuß oder die zu digitalisierenden Füße zusammen mit Ausschnitten der photogrammetrisch markierten Fläche 12 erfassen kann, ohne daß die Tastanordnung 28 störend in den zu digitalisierenden Meßraum hineinragt.

Dies kann beispielsweise dadurch erreicht werden, daß beim Einhängen der Tastanordnung 28 in den Halter 16 des Fußscanners 10 die Bildsensorvorrichtung 14 über einen Umlenkspiegel den zu digitalisierenden Fuß ungestört von der Tastanordnung erfaßt.

Durch Vergleich des 3D Modells des Fußes eines Kunden mit den 3D Modellen des Innenraums von angebotenen Schuhen wird dann der am besten passende Schuh ermittelt. Alternativ wird die 3D Information des Innenraumes der angebotenen Schuhe zusätzlich mit der 3D Information der zu den angebotenen Schuhen gehörenden Schuhleisten zur Auswahl des am besten passenden Schuhs verwendet (best-fit customization)

## Patentansprüche

1. Tastvorrichtung zum Erfassen einer drei-dimensionalen Raumform eines Körpers umfassend eine Tastanordnung (28), die folgendes umfasst:
ein Tastende (32) zum Abtasten einer abzutastenden Raumform eines Körpers;
eine mit automatisch photogrammetrisch auswertbaren Marken (22) versehene Grundplatte (12),
eine Kamera (30), deren Blickrichtung im Wesentlichen in Richtung des Tastendes ist;
eine Verbindungsvorrichtung (34) zur starren Verbindung der Kamera (30) mit dem Tastende (32), wobei die Kamera (30) so angeordnet ist, dass sie die mit automatisch photogrammetrisch auswertbaren Marken (22) versehene Grundplatte (12) erfassen kann, auf der der abzutastende Körper steht, während das Tastende (32) verschiedene Punkte der abzutastenden Raumform des Körpers abtastet; und wobei die Tastvorrichtung ferner umfasst:
ein photogrammetrisches Auswerteprogramm für eine Recheneinheit (18), wobei die Recheneinheit so gestaltet ist, daß von der Kamera (30) erzeugte Bildsignale an die Recheneinheit (18) geleitet werden können und das Auswerteprogramm aus der Folge aufgenommener und übertragener Bildausschnitte mit den automatisch photogrammetrisch auswertbaren Marken (22) die 3D Koordinaten der abzutastenden Raumform berechnen kann.

2. Tastvorrichtung nach Anspruch 1, wobei die abzutastende Raumform eines Körpers (26) eine Innenwand eines Hohlkörpers ist.

3. Tastvorrichtung nach Anspruch 1 oder 2, wobei ein Koordinatennullpunkt der photogrammetrisch markierten Fläche (12) eine Mulde zur Aufnahme des Tastendes (32) aufweist.

4. Tastvorrichtung nach einem der vorstehenden Ansprüche, welche wenigstens zwei Kameras (30) umfasst, wobei die Kameras so angeordnet sind, dass gleichzeitig mehrere Bildausschnitte der photogrammetrisch markierten Fläche (12) erfasst werden.

5. Tastvorrichtung nach einem der vorstehenden Ansprüche, wobei das Tastende (32) einen mechanischen und/oder optischen und/oder induktiven und/oder akustischen Kontaktmechanismus aufzeigt, welcher bei Berührung mit der Innenwand ein Kontaktsignal erzeugt.

6. Tastvorrichtung nach Anspruch 5, wobei von der Kamera (30) oder den wenigstens zwei Kameras erzeugte Bildsignale nur dann an die Recheneinheit (18) weitergeleitet werden bzw. vor der Weiterleitung an die Recheneinheit markiert werden, wenn bei der Aufnahme das Kontaktsignal erzeugt wurde.

7. Tastvorrichtung nach einem der vorstehenden Ansprüche, wobei das Tastende (32) eine opto-elektronische und/oder akustische Entfernungsmessvorrichtung umfasst.

8. Tastvorrichtung nach einem der vorstehenden Ansprüche, wobei das Tastende (32) eine mechanisch linear federnd verschiebbare Tastspitze mit linearem Weggeber umfasst.

9. Tastvorrichtung nach einem der vorstehenden Ansprüche, wobei die Tastvorrichtung eine Ergänzung eines photogrammetrischen Fußdigitalisierers (10) ist, der eine photogrammetrisch markierte Fläche (12) und eine Bildsensorvorrichtung (14) aufweist, wobei die Bildsensorvorrichtung (14) mit einem Halter (16) um einen zu digitalisierenden Körper herumgeführt wird, und wobei die Tastvorrichtung eine Halterung umfasst, die mit dem Halter (16) der Bildsensorvorrichtung (14) des Fußdigitalisierers (10) verbindbar ist, und in der die Tastanordnung (28) entnehmbar gehaltert werden kann, und wobei die Tastanordnung (28) in der Halterung so ausgerichtet ist, dass die Tastanordnung das Bildfeld der Bildsensorvorrichtung (14) auf den zu digitalisierenden Körper und die photogrammetrisch markierte Fläche (12) nur unwesentlich verdeckt.

10. Verfahren zur Erfassung einer drei-dimensionalen Raumform eines Körpers, insbesondere der Raumform eines Innenraums eines Hohlkörpers, das folgende Schritte umfasst:
Bereitstellen einer Tastvorrichtung gemäß Anspruch 1;
Befestigen des zu digitalisierenden Körpers (26) auf der Grundplatte (12), die mit automatisch photogrammetrisch auswertbaren Marken (22) an bekannten Positionen versehen ist;
Abtasten der zu erfassenden Raumform mit dem Tastende (32) der Tastanordnung (28);
Aufnehmen von zumindest einem Ausschnitt der photogrammetrisch markierten Fläche (12) durch die Kamera (30), während das Tastende (32) den Punkt abtastet, wobei eine Mehrzahl von photogrammetrisch auswertbaren Marken (22) erfasst wird;
Wiederholen der Schritte Abtasten und Aufnehmen für eine Vielzahl unterschiedlicher Punkte der zu erfassenden Raumform;
Auswerten der aufgenommenen Bilder durch das Auswerteprogramm auf einer Recheneinheit (18), wobei das Auswerteprogramm aus den bekannten Positionen der von der Kamera (30) erfassten photogrammetrischen Marken (22) durch eine photogrammetrische Auswertung der Bildsequenzen die jeweilige Raumposition und jeweilige Ausrichtung der Kamera (30) bestimmt und aus der Kameraposition und -ausrichtung die jeweilige Raumposition des mit der Kamera (30) starr verbundenen Tastendes (32) ableitet und aus den so ermittelten Raumpositionen des Tastendes (32) das 3D Modell des Körpers (26), insbesondere des Innenraums eines Hohlkörpers und/oder geometrische Maße des Innenraums ermittelt werden.

11. Verfahren nach Anspruch 10, wobei das Abtasten der Raumform in einer kontinuierlichen Bewegung des Tastendes (32) erfolgt und wobei die Kamera (30) in einem Videomode kontinuierlich Aufnahmen macht.

12. Verfahren nach Anspruch 10 oder 11, wobei die Raumform eines Innenraums eines Hohlkörpers, insbesondere eines Schuhs, erfasst wird, und wobei die Kamera (30) beim Abtasten des Innenraums außerhalb des Hohlkörpers verbleibt.

13. Verfahren nach Anspruch 12, das ferner folgende Schritte enthält:
Bestimmen einer konvexen Hülle (44) des Innenraums aus einer insgesamt erzeugten Punktwolke von Innenraum-Koordinaten aus ermittelten Positionen;
Vergleichen der ermittelten Positionen des Tastendes (32) mit der konvexen Hülle des Innenraums;
Löschen von Punkten von ermittelten Positionen, die nicht auf der konvexen Hülle liegen.

14. Verfahren nach einem der Ansprüche 10 bis 13, wobei die abzutastende Raumform zu einem der folgenden Körper gehört:
eine Fußbekleidung;
eine Kopfbekleidung und/oder ein Kopfschutz;
eine den menschlichen oder animalischen Körper bekleidende und/oder schützende Hülle;
ein orthopädisches und/oder prothetisches Produkt mit einem nach außen offenen Innenraum, der eine an eine Anatomie eines orthopädisch und/oder prothetisch zu versorgenden Patienten anzupassende Raumfläche darstellt.

## Claims

1. A sensing device for detecting a three-dimensional spatial shape of a body, comprising a sensing arrangement (28) comprising:
a sensing end (32) for scanning a spatial shape to be scanned of a body;
a base plate (12) provided with marks (22) suitable to be automatically photogrammetrically evaluated;
a camera (30), the viewing direction of which is substantially towards the sensing end;
a connecting device (34) for rigidly connecting the camera (30) with the sensing end (32), the camera (30) being arranged such that it can detect the base plate (12) which is provided with marks (22) suitable to be automatically photogrammetrically evaluated and on which the body to be scanned has been placed, while the sensing end (32) scans different points of the spatial shape to be scanned of the body; and the sensing device further comprising:
a photogrammetric evaluation program for a computing unit (18), the computing unit being configured such that image signals generated by the camera (30) can be routed to the computing unit (18) and the evaluation program can calculate the 3D coordinates of the spatial shape to be scanned from the sequence of recorded and transmitted image sections using the marks (22) suitable to be automatically photogrammetrically evaluated.

2. The sensing device according to claim 1, wherein the spatial shape to be scanned of a body (26) is an inner wall of a hollow body.

3. The sensing device according to claim 1 or 2, wherein an origin of coordinates of the photogrammetrically marked surface (12) has a trough for accommodating the sensing end (32).

4. The sensing device according to any of the preceding claims, comprising at least two cameras (30), wherein the cameras are arranged such that a plurality of image sections of the photogrammetrically marked surface (12) is detected at the same time.

5. The sensing device according to any of the preceding claims, wherein the sensing end (32) exhibits a mechanical and/or optical and/or inductive and/or acoustic contact mechanism which generates a contact signal upon contact with the inner wall.

6. The sensing device according to claim 5, wherein image signals generated by the camera (30) or the at least two cameras are passed on to the computing unit (18) or are marked before being passed on to the computing unit only when the contact signal has been generated during recording.

7. The sensing device according to any of the preceding claims, wherein the sensing end (32) comprises an opto-electronic and/or acoustic distance measuring device.

8. The sensing device according to any of the preceding claims, wherein the sensing end (32) comprises a mechanically linearly resiliently displaceable sensing tip having a linear displacement sensor.

9. The sensing device according to any of the preceding claims, wherein the sensing device is a supplement to a photogrammetric foot digitizer (10) which includes a photogrammetrically marked surface (12) and an image sensor device (14), the image sensor device (14) being guided around a body to be digitized, using a holder (16), and wherein the sensing device comprises a mount which can be connected with the holder (16) of the image sensor device (14) of the foot digitizer (10) and in which the sensing arrangement (28) can be removably mounted, and the sensing arrangement (28) being oriented in the mount such that the sensing arrangement only insignificantly conceals the image field of the image sensor device (14) on the body to be digitized and the photogrammetrically marked surface (12).

10. A method of detecting a three-dimensional spatial shape of a body, in particular the spatial shape of an interior of a hollow body, the method comprising the following steps:
providing a sensing device according to claim 1;
fastening the body (26) to be digitized on the base plate (12) which, at known positions, is provided with marks (22) suitable to be automatically photogrammetrically evaluated;
scanning the spatial shape to be detected by means of the sensing end (32) of the sensing arrangement (28);
recording at least one section of the photogrammetrically marked surface (12) by the camera (30) while the sensing end (32) scans the point, a plurality of marks (22) suitable to be photogrammetrically evaluated being detected;
repeating the steps of scanning and recording for a multitude of different points of the spatial shape to be detected;
evaluating the recorded images by the evaluation program on a computing unit (18), the evaluation program determining, by a photogrammetric evaluation of the image sequences, the respective spatial position and the respective orientation of the camera (30) from the known positions of the photogrammetric marks (22) detected by the camera (30) and deriving the respective spatial position of the sensing end (32) rigidly connected with the camera (30) from the camera position and camera orientation, and the 3D model of the body (26), in particular the interior of a hollow body and/or geometric measurements of the interior, being established from the spatial positions of the sensing end (32) established in this manner.

11. The method according to claim 10, wherein the scanning of the spatial shape is effected in a continuous movement of the sensing end (32) and wherein the camera (30) makes recordings continuously in a video mode.

12. The method according to claim 10 or 11, wherein the spatial shape of an interior of a hollow body, in particular of a shoe, is detected, and wherein the camera (30) remains outside of the hollow body while the interior is scanned.

13. The method according to claim 12, further comprising the following steps:
determining a convex envelope (44) of the interior from an overall generated point cloud of coordinates of the interior from established positions;
comparing the established positions of the sensing end (32) with the convex envelope of the interior;
deleting points of established positions that do not lie on the convex envelope.

14. The method according to any of claims 10 to 13, wherein the spatial shape to be scanned pertains to any one of the following bodies:
a footwear;
a headgear and/or a headguard;
a covering for clothing and/or protecting the human or animal body;
an orthopedic and/or prosthetic product having an interior that is open to the outside and presents a spatial surface area to be adjusted to an anatomy of a patient requiring orthopedic and/or prosthetic care.

## Revendications

1. Dispositif palpeur pour saisir une forme spatiale en trois dimensions d'un corps, comprenant un agencement palpeur (28) qui comprend :
une extrémité palpeuse (32) pour balayer une forme spatiale à balayer d'un corps ;
une plaque de base (12) pourvue de marques (22) automatiquement analysables par photogrammétrie ;
une caméra (30) dont la direction de vision est sensiblement en direction de l'extrémité palpeuse;
un dispositif de liaison (34) pour relier de manière rigide la caméra (30) avec l'extrémité palpeuse (32), la caméra (30) étant agencée de telle sorte qu'elle peut saisir la plaque de base (12) pourvue de marques (22) automatiquement analysables par photogrammétrie, sur laquelle se trouve le corps à balayer, tandis que l'extrémité palpeuse (32) balaye différents points de la forme spatiale à balayer, et le dispositif palpeur comprenant en outre :
un programme d'analyse photogrammétrique pour une unité de calcul (18), l'unité de calcul étant constituée de telle sorte que des signaux d'image engendrés par la caméra (30) puissent être amenés à l'unité de calcul (18) et qu'à partir de la séquence d'extraits d'images prises et transmises, le programme d'analyse puisse calculer les coordonnées 3D de la forme spatiale à balayer à l'aide des marques (22) automatiquement analysables par photogrammétrie.

2. Dispositif palpeur selon la revendication 1, dans lequel la forme spatiale à balayer d'un corps (26) est une paroi intérieure d'un corps creux.

3. Dispositif palpeur selon la revendication 1 ou 2, dans lequel une origine de coordonnées de la surface (12) marquée par photogrammétrie présente un creux pour recevoir une extrémité palpeuse (32).

4. Dispositif palpeur selon l'une quelconque des revendications précédentes, qui comprend au moins deux caméras (30), les caméras étant agencées de telle sorte que plusieurs extraits d'image de la surface (12) marquée par photogrammétrie sont saisies.

5. Dispositif palpeur selon l'une quelconque des revendications précédentes, dans lequel l'extrémité palpeuse (32) présente un mécanisme de contact mécanique et/ou optique et/ou inductif qui engendre un signal de contact au contact avec la paroi intérieure.

6. Dispositif palpeur selon la revendication 5, dans lequel des signaux d'image engendrés par la caméra (30) ou les au moins deux caméras ne sont transmis à l'unité de calcul (18) ou marqués avant d'être transmis à l'unité de calcul que si le signal de contact a été engendré à la prise de vue.

7. Dispositif palpeur selon l'une quelconque des revendications précédentes, dans lequel l'extrémité palpeuse (32) comprend un dispositif de mesure de distance optoélectronique et/ou acoustique.

8. Dispositif palpeur selon l'une quelconque des revendications précédentes, dans lequel l'extrémité palpeuse (32) comprend une pointe palpeuse à déplacement mécanique linéaire élastique avec un capteur de déplacement linéaire.

9. Dispositif palpeur selon l'une quelconque des revendications précédentes, dans lequel le dispositif palpeur est un complément d'un numériseur de pied (10) photogrammétrique qui présente une surface (12) marquée par photogrammétrie et un dispositif de capteur d'image (14), le dispositif de capteur d'image (14) étant guidé avec un support (16) autour d'un corps à numériser, et le dispositif palpeur comprenant une monture qui peut être reliée au support (16) du dispositif de capteur d'image (14) du numériseur de pied (10), et dans laquelle l'agencement palpeur (28) peut être retenu de façon amovible, et dans lequel l'agencement palpeur (28) est orienté de telle sorte dans la monture que l'agencement palpeur cache à peine le champ d'image du dispositif capteur d'image (14) sur le corps à numériser et sur la surface (12) marquée par photogrammétrie.

10. Procédé pour la saisie d'une forme spatiale en trois dimensions d'un corps, en particulier de la forme spatiale de l'espace intérieur d'un corps creux, qui comprend les étapes suivantes :
fournir un dispositif palpeur selon la revendication 1 ;
fixer le corps (26) à numériser sur la plaque de base (12) qui, dans des positions connues, est pourvue de marques (22) automatiquement analysables par photogrammétrie ;
balayer la forme spatiale à saisir avec l'extrémité palpeuse (32) de l'agencement palpeur (28) ;
photographier un extrait de la surface (12) marquée par photogrammétrie par la caméra (30) tandis que l'extrémité palpeuse (32) balaye le point, une multitude de marques (22) automatiquement analysables par photogrammétrie étant saisies ;
répéter les étapes de balayage et de prise de vues pour une multitude de points différents de la forme spatiale à saisir ;
analyser les images prises par le programme d'analyse sur une unité de calcul (18), le programme d'analyse déterminant la position spatiale respective et l'orientation respective de la caméra 30, à partir des positions connues des marques (22) automatiquement saisies par photogrammétrie par la caméra (30), par une analyse photogrammétrique des séquences d'image, et dérivant à partir de la position et de l'orientation de la caméra la position spatiale respective de l'extrémité palpeuse (32) reliée de manière rigide à la caméra (30) et, à partir des positions spatiales ainsi déterminées de l'extrémité palpeuse (32), le modèle 3D du corps (26), en particulier de l'espace intérieur du corps creux, et/ou des dimensions géométriques de l'espace intérieur étant déterminés.

11. Procédé selon la revendication 10, dans lequel le balayage de la forme spatiale est effectué dans un mouvement continu de l'extrémité palpeuse (32) et la caméra (30) fait des prises de vues en continu dans un mode vidéo.

12. Procédé selon la revendication 10 ou 11, dans lequel la forme spatiale d'un espace intérieur d'un corps creux, en particulier d'une chaussure, est saisie, et dans lequel lors du balayage de l'espace intérieur, la caméra (30) reste à l'extérieur du corps creux.

13. Procédé selon la revendication 12, qui comprend en outre les étapes suivantes :
déterminer une enveloppe (44) convexe de l'espace intérieur à partir d'un nuage de points globalement engendré de coordonnées d'espace intérieur à partir de positions déterminées ;
comparer les positions déterminées de l'extrémité palpeuse (32) avec l'enveloppe convexe de l'espace intérieur ;
effacer des points de positions déterminées, qui ne se trouvent pas sur l'enveloppe convexe.

14. Procédé selon l'une des revendications 10 à 13, dans lequel la forme spatiale à balayer appartient à un des corps suivants :
une chaussure ;
un couvre-chef et/ou un bonnet ;
une enveloppe recouvrant et/ou protégeant le corps d'un homme ou d'un animal ;
un produit orthopédique et/ou prothétique avec un espace intérieur ouvert vers l'extérieur qui représente une surface spatiale à adapter à une anatomie d'un patient à soigner du point de vue orthopédique et/ou prothétique.
